# EUROPEAN PATENT APPLICATION

(11) **EP 2 461 546 A1**
(43) Date of publication of application: **06.06.2012**
(21) Application number: 11178399.9
(22) Date of filing: 23.08.2011
(51) Int. Cl.: H04L 29/08

(54) **Apparatus and method for controlling a web browser display**

(30) Priority: 01.12.2010 KR 20100121534
(71) Applicant: Pantech Co., Ltd., Seoul 121-792 (KR)
(72) Inventor: Chang, Youn Joo, 121-792 Seoul (KR); Kim, Jae Hun, 121-792 Seoul (KR); Baek, Hee Sook, 121-792 Seoul (KR); Oh, Myung Seob, 121-792 Seoul (KR); Lee, Hwan Hee, 121-792 Seoul (KR); Chang, Hyun Woo, 121-792 Seoul (KR); Cha, Bong Kyu, 121-792 Seoul (KR); Choi, Jeong Wook, 121-792 Seoul (KR)
(74) Representative: Herzog, Markus

(57) **Abstract**

An apparatus capable of modifying and displaying content of a website displayed on a web browser includes a communication unit to transmit or receive data to or from a web server, a determination unit to analyze a protocol of a website received from the web server through the communication unit and to determine specific characteristics of the website, and a control unit to modify content of the website using information about the specific characteristics of the website and to display the modified content on a web browser. A web browser display control method includes determining the type of a protocol of an accessed website, determining specific characteristics of the website based on the determined type of the protocol, modifying content of the website using information about the determined layout characteristics of the website, and displaying the modified content on a web browser.

## Description

### CROSS-REFERENCE TO RELATED APPLICATION

This application claims priority from and the benefit under 35 U.S.C. §119(a) of Korean Patent Application No. 10-2010-0121534, filed on December 1, 2010, which is incorporated by reference for all purposes as if fully set forth herein.

### BACKGROUND

FIELD

The present disclosure relates to an apparatus capable of modifying and displaying content of a website displayed on a web browser and a method for controlling a web browser display.

DISCUSSION OF THE BACKGROUND

According to the development of wireless network technology and infrastructure, people may obtain desired data with more convenience using an apparatus such as a smart phone, a laptop computer, and a personal digital assistant (PDA). Such an apparatus having a mobile arrangement and/or form factor and network connectability will be referred to herein as a mobile terminal. In an example, mobile terminal users may receive content of a website provided by a web server via a web browser of a mobile terminal in a similar manner as in the PC environment.

The content of websites provided by a web server includes numerous advertisement contents. However, since the advertisement contents are not displayed on a website with any consideration for the tendency or characteristics of a person who uses the website, unfavorable advertisement contents may be continuously displayed on a web browser. Accordingly, there is a need for a terminal having a web browser that is capable of providing customized advertisement content based on user information such as age or sex of the user who uses the mobile terminal and website usage patterns of the user.

### SUMMARY

Exemplary embodiments of the present invention provide an apparatus which is capable of analyzing protocol information of a website received from a web server, determining specific characteristics of the website associated with the characteristics of content information, and providing customized content information based on the analysis result of user information. Exemplary embodiments of the present invention also provide a method for controlling a web browser display.

Additional features of the invention will be set forth in the description which follows, and in part will be apparent from the description, or may be learned by practice of the invention.

Exemplary embodiments of the present invention provide an apparatus including a communication unit to transmit data to a web server and to receive data including content of a website from the web server; a determination unit to determine a type of protocol of the website and to identify a region of interest of the website; and a control unit to modify content of the region of interest of the website using information of the protocol of the website and to control a display unit to display the modified content on a web browser.

Exemplary embodiments of the present invention provide a method for controlling a web browser display, including determining a type of protocol of an accessed website; determining layout characteristics of the website based on the type of the protocol; modifying content of the website using information about the layout characteristics of the website; and displaying the modified content on a web browser.

Exemplary embodiments of the present invention provide a mobile terminal, including a communication unit to transmit data to a web server and to receive data including content of a website from the web server; a determination unit to determine a type of protocol of the content and to determine a modification method for a region of interest of the website; an extraction unit to extract detailed information of at least one region of the content based on characteristics of the protocol type; an identification unit to identify a region of interest from the content based on the detailed information; a storage unit to store at least one of user information, web browser usage information, and layout characteristics; a control unit to modify the content of the region of interest of the website using the modification method; and a display unit to display the modified content on a web browser.

It is to be understood that both forgoing general descriptions and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a schematic block diagram illustrating a configuration of a mobile terminal according to an exemplary embodiment of the invention.

FIG. 2 is a flowchart illustrating a method for controlling a web browser display according to an exemplary embodiment of the invention.

FIG. 3 is a schematic diagram illustrating the structure of an HTML5 document according to an exemplary embodiment of the invention.

FIG. 4 is a flowchart illustrating a method for modifying and displaying advertisement content on a web browser of a mobile terminal according to an exemplary embodiment of the invention.

FIG. 5 is a diagram illustrating a modification of the advertisement content on a web browser according to an exemplary embodiment of the invention.

FIG. 6 is a diagram illustrating the access to an advertisement site after clicking the modified advertisement content according to an exemplary embodiment of the invention.

FIG. 7 is a diagram illustrating a process of displaying alternatively the existing content and modified advertisement content if a predetermined event occurs according to an exemplary embodiment of the invention.

FIG. 8 is a diagram illustrating a state in which watermarked content is displayed in a text region on a web browser according to an exemplary embodiment of the invention.

FIG. 9 is a diagram illustrating a state in which advertisement content is added to a blank region on a web browser according to an exemplary embodiment of the invention.

### DETAILED DESCRIPTION OF THE ILLUSTRATED EMBODIMENTS

Exemplary embodiments now will be described more fully hereinafter with reference to the accompanying drawings, in which exemplary embodiments are shown. The present disclosure may, however, be embodied in many different forms and should not be construed as limited to the exemplary embodiments set forth herein. Rather, these exemplary embodiments are provided so that the present disclosure is thorough, and will fully convey the scope of the invention to those skilled in the art. It will be understood that for the purposes of this disclosure, "at least one of each" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g. XYZ, XZ, YZ, X). Throughout the drawings and the detailed description, unless otherwise described, the same drawing reference numerals are understood to refer to the same elements, features, and structures. The relative size and depiction of these elements may be exaggerated for clarity, illustration, and convenience.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

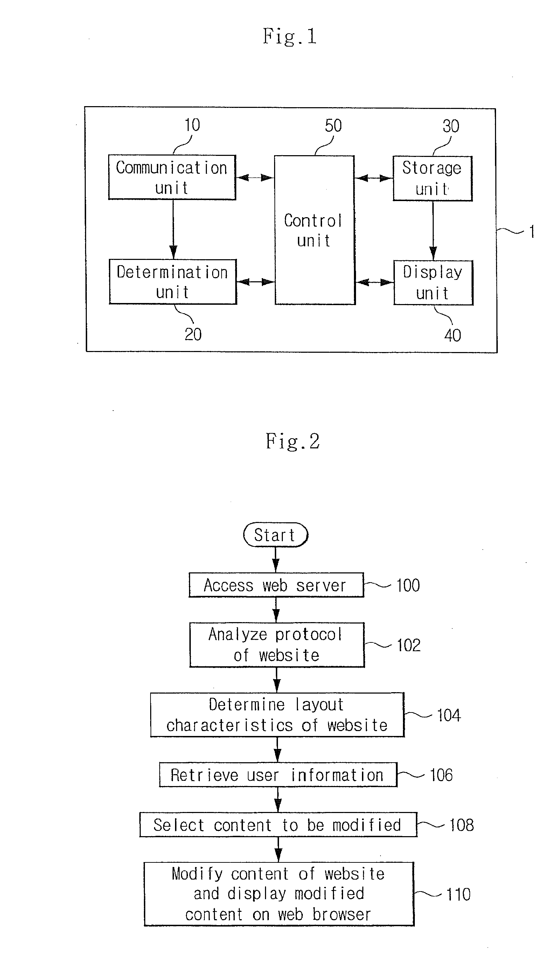

FIG. 1 is a schematic block diagram illustrating a configuration of a mobile terminal according to an exemplary embodiment of the invention.

As shown in FIG. 1, a mobile terminal 1 includes a communication unit 10, a determination unit 20, a storage unit 30, a display unit 40 and a control unit 50.

The communication unit 10 includes an antenna mounted in the mobile terminal 1 and serves to transmit or receive data to or from a web server over a mobile communication network such as Wi-Fi and 3^{rd} generation mobile telecommunications (3G). In an example, if a user executes a web browser using a mobile terminal 1 and attempts to access a specific website, the communication unit 10 receives content information of the website from the web server and transmits the content information to the determination unit 20 or the control unit 50.

The determination unit 20 analyzes a protocol of the website received from the web server through the communication unit 10. In an example, the analysis of a protocol may include the steps of determining the type of a protocol, identifying a specific region of interest to modify based on the specific characteristics of the protocol, and extracting a specific target to modify. In an example, the determination unit 20 determines the type of the protocol of the website, and determines the layout characteristics of the website. Further, the protocol of the website may be a format such as HyperText Markup Language 5 (HTML5). In the present specification, the term "layout characteristics" may include some or all information associated with the type of content provided in a specific region of a website. The term "type of content" may include the type of content format and content theme. In an example, the "layout characteristics" may include information about specific regions such as a text region, an image region, a blank region, and an advertisement region. All of the above regions may be arranged in the website. In addition, Specific information such as information regarding presence of a background image in the background of a text region and information regarding presence of a background color may also be included in the "layout characteristics".

The display unit 40 may be a touch screen display unit mounted in the mobile terminal 1 and serves to display a variety of information to a user based on a command of the control unit 50. In addition, if the user executes a specific web browser, the display unit 40 may display information about the web browser.

The control unit 50 modifies the content of the website using the user information and/or the layout characteristics of the website determined by the determination unit 20. The control unit 50 also controls the display unit 40 to display the modified content on the web browser. The mobile terminal 1 may include a processor as an executor of at least one of the functions of the determination unit 20 and the control unit 50. Further, the functions performed by the units described above for the mobile terminal 1 are not limited as such, and may be performed in full or in part by one or more other units, including those described above, of the mobile terminal 1. For example, certain computational-based functions of the communication unit 10, determination unit 20, storage unit 30, and/or display unit 40 may be performed by the control unit 50.

In an example, the control unit 50 may modify content of the website by adding new advertisement content into a blank region of the website. The blank region of the website may be identified by the determination unit 20 based on information of the protocol of the website such as layout characteristics.

FIG. 2 is a flowchart illustrating a method for controlling a web browser display according to an exemplary embodiment of the invention.

If a user executes a web browser of a mobile terminal and inputs a command to access a specific website, the control unit 50 of the mobile terminal controls the communication unit 10 to access a web server and to receive content information of the website (100). Next, the control unit 50 analyzes the protocol of the website (102) and determines the layout characteristics of the website (104). Next, if the layout characteristics are determined, the control unit 50 retrieves user information stored in the storage unit 30 (106), selects the content to be modified based on the retrieved user information (108), and modifies the content of the website and displays the modified content on the web browser (110).

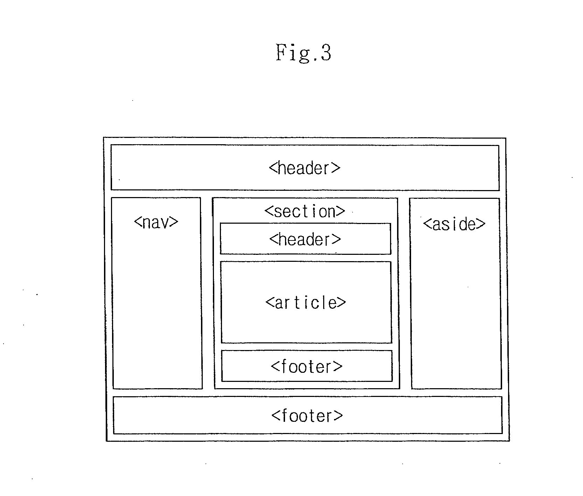

FIG. 3 is a schematic diagram illustrating the structure of HTML5 document according to an exemplary embodiment of the invention.

Although various website protocols such as HTML, HTML4, HTML5, XHTML and DOM2HTML may be used, description will be made about the HTML5 protocol as an example hereinafter.

Since HTML5 document structure is more explicit than the older versions of HTML, the identification of a region which contains advertisement content may be relatively easier. In particular, HTML5 adds many new syntactical features. These features include tags (or "elements") such as <video>, <audio>, and <source>which enable multimedia content such as an image, a video and an audio to be inserted without using flash or other similar methods that require plugins or Application Programming Interfaces (APIs) which use a user interface (UI).

In addition, the <canvas> tag provides a direct picture drawing function in a specific region and supports drawing rather than a fixed image. Accordingly, animation which uses flash may be implemented in this region. The <aside> tag is used to define a region separated from the region that contains the main content of the document. In addition, one or more regions separated from neighboring content such as an advertisement block are specified.

Various types of protocols may be analyzed to determine the layout characteristics and to identify specific regions of interest in the web page based on the determined layout characteristics. In an example, HTML5 standard may be used to identify the layout characteristics and specific regions of the web page. The mobile terminal 1 may analyze the HTML5 protocol and identify specific regions of interest based on specific characteristics of HTML5 protocol. The mobile terminal 1 may identify the content of the <aside> tag and determine the content of the <aside> tag as an advertisement region. Further, an "article" region in which actual web content is included may be identified as an advertisement region because advertisement is often included in the "article" region in a floating state, and the actual advertisement content can be viewed by the user by clicking the advertisement.

Aside from tags of the HTML5, the layout characteristics may be determined by filtering one or more of tag information such as an access URL and a content format of the protocol. More specifically, since a cost-per-click (CPS) advertisement of a sponsored link or a cost-per-mile (CPM) advertisement of a portal site mainly uses a specific advertisement server, an advertisement region may be identified by performing parsing and database (DB) filtering using keywords such as "iframe src url" and "div class". Further, if a JavaScript part is present, the advertisement region may be found using JavaScript identifier including "js".

If a specific content is created using Adobe Flash, the content may be an advertisement content. Thus, it is possible to identify an advertisement region using a tag associated with flash. More specifically, since a flash file uses the tags "embedded" and "object", the advertisement content may be identified using an identifier such as "type=application/x-shockwave-flash" option.

In a similar way, specific regions of interest such as advertisement region may be identified. In an example, a main content region, a text region, an image region and a blank region may be identified using similar methods based on the specific characteristics of a specific region.

After determining the protocol and the layout characteristics of the website, the mobile terminal 1 may select a specific region of interest to modify. Next, the mobile terminal 1 may identify content to be modified in the specific region of interest, and modify the identified content. Further, the modified content may be selected and modified based on the analysis result of the user information. Also, display method of the modified content may be determined based on the analysis result of the user information. Alternatively, although not illustrated, a system or an apparatus such as an independent server may execute one or more of the above mentioned processes on behalf of the mobile terminal 1.

The term "user information" used in the present specification may include user information inputted to the mobile terminal 1 by the user through an input unit (not shown) and stored in the storage unit 30. The user information may include information of web browser usage pattern that may be regularly or continuously updated while the user surfs the web using the mobile terminal 1. In an example, the user may store specific user information such as personal information (e.g. age, sex, preference information, a matter of interest) in the storage unit 30 through the input unit. The mobile terminal 1 may gather information such as information about a favorite keyword, advertisement category and advertisement type of the user and create a usage pattern data. The usage pattern data may be stored in the storage unit 30 and be updated regularly or continuously. Table 1 shows an example of information about the web browser usage pattern of a certain user.

**Table 1**

| User tendency keyword | Month/time | Favorite coordinates | Image size |
|---|---|---|---|
| Browser usage pattern analysis and keyword DB analysis: autumn clothes and shoes | October/17:30-18:00 | A: 196.321 B: 225.321 | W: 320 H: 240 |

With reference to Table 1, the user frequently clicked advertisements associated with "autumn clothes and shoes" at specific favorite coordinates with specific image size from 17:30 to 18:00 in October. Using such user information, the control unit 50 may modify related advertisement content based on the tendency of the user and may display the modified advertisement content on the web browser. Further, information of web browser usage pattern may include such as favorite web browser size for a specific content, text characteristics of frequently visited website (e.g., font, size and arrangement), highly used search keywords, visited website URL, online purchase history, content format of clicked advertisement(s), types of clicked advertisement(s), and click frequency of the clicked advertisement(s).

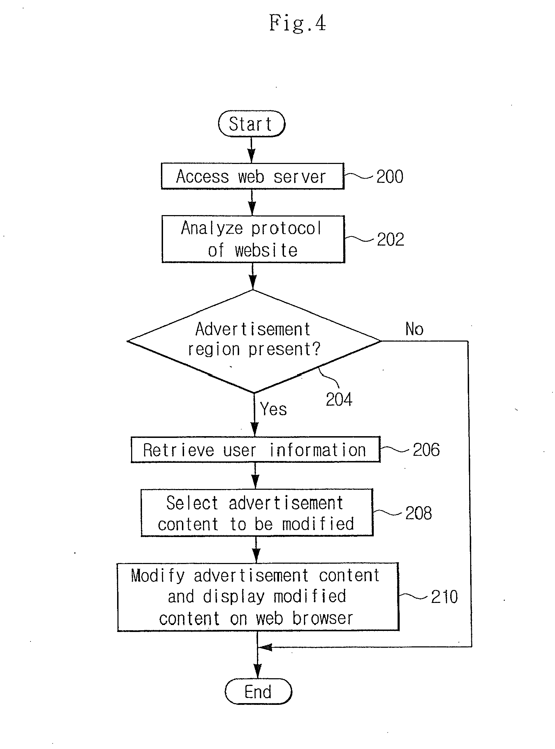

FIG. 4 is a flowchart illustrating a method for modifying and displaying advertisement content on a web browser of a mobile terminal according to an exemplary embodiment of the invention. For ease of description, FIG. 4 will be described as if the method is performed by the mobile terminal 1. However, the method is not limited as such.

Referring to FIG. 4, if a user executes a web browser of a mobile terminal 1 and inputs a command for accessing a specific website, the control unit 50 accesses a web server through the communication unit 10 (200) and receives website content. Next, the determination unit 20 analyzes the received protocol of the website (202) and determines whether an advertisement region is present (204).

In an example, the determination as to whether the advertisement region is present may be made after an analysis result generated by using the <aside> tag of the HTML5 protocol or filtering the advertisement access URL or the advertisement format type.

If it is determined that the advertisement region is present, the control unit 50 retrieves user information stored in the storage unit 30 (206) and selects advertisement content to be modified based on the user information (208). Thereafter, the content of the website is modified and displayed on the web browser (210).

The modification of content may include replacement of the content with new content. Further, new advertisement content may be overlaid on the existing advertisement content or may be added to a separate region. The added advertisement content may be provided by an advertisement server which is separately managed, and HTML tags of the advertisement content can be modified to move a screen to an advertisement site through the advertisement server.

Returning to the result of block 204, if it is determined that the advertisement region is not present, the control unit 50 may control to display the received content of the website. Alternatively, the control unit 50 may modify an identified blank region to add new advertisement content.

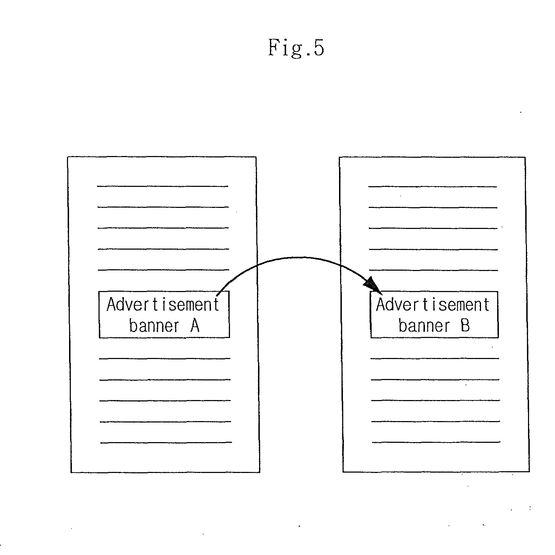

Hereinafter, a method for controlling a web browser display of a mobile terminal according to an exemplary embodiment of the invention will be described with reference to FIG. 5 through FIG. 9.

FIG. 5 is a diagram illustrating a modification of the advertisement content on a web browser according to an exemplary embodiment of the invention. "Advertisement banner A" is located in the middle portion of a text region on a website screen displayed on the web browser. The control unit 50 identifies an advertisement region in which "advertisement banner A" is located, using advertisement region identifiers such as HTML tag information associated with a flash file or the <aside> tag of HTML5.

Next, the control unit 50 retrieves user information from the storage unit 30 and selects suitable advertisement content based on the tendency of the user using information such as sex and age of the user and a web browser usage pattern. As shown in FIG. 5, new advertisement content "advertisement banner B" is inserted in replacement of "advertisement banner A" and the modified website is displayed to the user through the web browser of the mobile terminal 1.

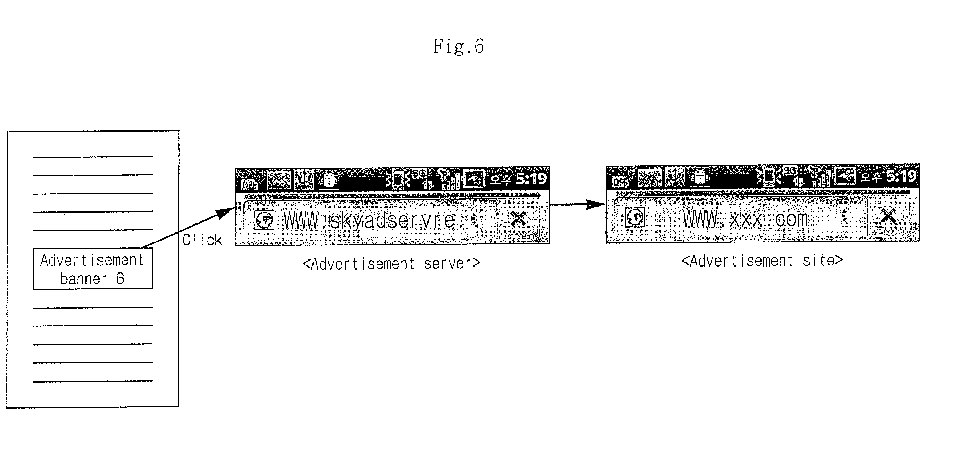

FIG. 6 is a diagram illustrating the access to an advertisement site after clicking the modified advertisement content according to an exemplary embodiment of the invention.

If the advertisement content is changed to "advertisement banner B" as shown in FIG. 5 and the user clicks "advertisement banner B", the mobile terminal 1 accesses the advertisement site through an advertisement server and the screen of the mobile terminal 1 displays the content of the advertisement site relating to the "advertisement banner B".

"Advertisement banner B" may be provided by the advertisement server which is separately managed or may be stored in the storage unit 30 of the mobile terminal 1. Further, the mobile terminal 1 may update user-related advertisement content such as "advertisement banner B" based on the analysis result of the web browser usage pattern. In order to replace "advertisement banner A" with "advertisement banner B", the control unit 50 changes the advertisement access URL on the web browser to the access URL of a separate server such as "skyadserver". Thus, if the user clicks "advertisement banner B", the web browser screen is moved to the advertisement site through the separate server, "skyadserver".

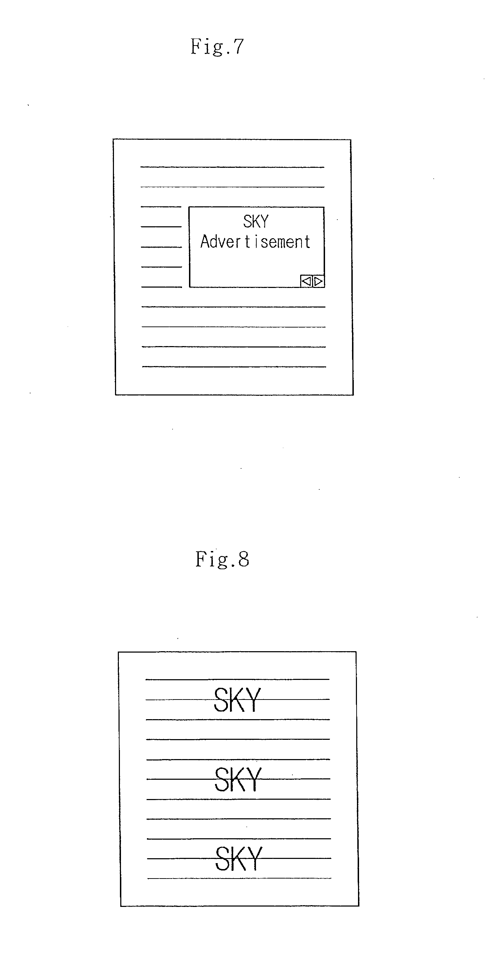

FIG. 7 is a diagram illustrating a process of displaying alternatively the existing content and modified advertisement content if a predetermined event occurs according to an exemplary embodiment of the invention.

Referring to FIG. 7, new advertisement content is overlaid on the existing advertisement content on a website. In an example, an arrow is displayed on the lower right side of a new advertisement, "SKY advertisement". If a user clicks the arrow, advertisement content provided by the existing website may be displayed alternatively.

In another example, the advertisement content may be displayed in a slideshow manner in which the existing advertisement content and the new advertisement content are alternately displayed automatically without a specific command of a user.

FIG. 8 is a diagram illustrating a state in which watermarked content is displayed in a text region on a web browser according to an exemplary embodiment of the invention.

Referring to FIG. 8, the protocol of the website is analyzed to identify a text region and the presence of the background of the text region. If it is determined that the background of the text region is not present, watermark advertisement content is inserted into the background of the text region. The watermark advertisement content may be predetermined, or may be selected according to user information retrieved from the storage unit 30.

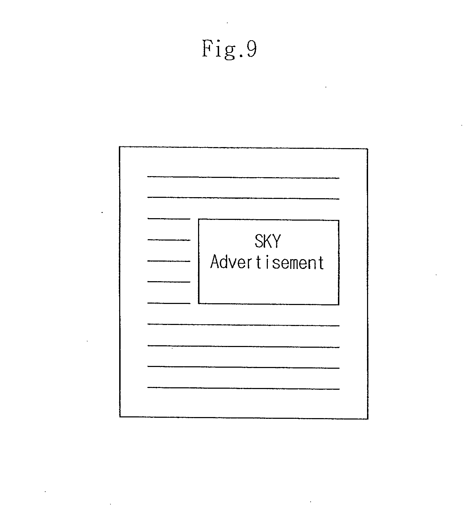

FIG. 9 is a diagram showing a state in which advertisement content is added to a blank region on a web browser according to an exemplary embodiment of the invention. New advertisement content is inserted into a blank region if a blank region is identified on the website.

A "client full" function for temporarily displaying an added advertisement screen before the access of a specific website may be performed by the modification of the web content. If an Active Server Pages (ASP) session has expired, a browser can be redirected and a website page is reloaded. If ASP session expires, an advertisement screen may be temporarily displayed on the web browser and then the web browser may be refreshed.

In an example, the code "<META HTTP-EQUIV="REFRESH" CONTENT ="30" URL=http://server/page.htm>" may be inserted such that an advertisement is inserted into a web browser of a mobile terminal 1.

With the mobile terminal and a method for controlling web browser display according to the disclosure, web browser environments suitable for user preference including customized advertisement content may be available.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

An apparatus capable of modifying and displaying content of a website displayed on a web browser includes a communication unit to transmit or receive data to or from a web server, a determination unit to analyze a protocol of a website received from the web server through the communication unit and to determine specific characteristics of the website, and a control unit to modify content of the website using information about the specific characteristics of the website and to display the modified content on a web browser. A web browser display control method includes determining the type of a protocol of an accessed website, determining specific characteristics of the website based on the determined type of the protocol, modifying content of the website using information about the determined layout characteristics of the website, and displaying the modified content on a web browser.

## Claims

1. An apparatus comprising:
a communication unit adapted to transmit data to a web server and to receive data including content of a website from the web server;
a determination unit adapted to determine a type of protocol of the website and to identify a region of interest of the website; and
a control unit adapted to modify content of the region of interest of the website using information of the protocol of the website and to control a display unit to display the modified content on a web browser.

2. The apparatus of claim 1, wherein the determination unit is adapted to determine the type of the protocol of the website based on characteristics of the protocol, to determine layout characteristics of the website, and to identify the region of interest based on the layout characteristics, and
wherein the control unit is adapted to modify content of the region of interest using information of the layout characteristics,
the protocol of the website preferably being a version of Hyper Text Markup Language (HTML).

3. The apparatus of claim 1 or 2, wherein the region of interest is identified by filtering at least one of tag information, an access URL and a content format of the protocol of the website.

4. The apparatus of any of claims 1 to 3, further comprising a storage unit adapted to store user information of the mobile terminal, and
wherein the control unit is adapted to modify the content of the region of interest based on the user information,
and, preferably, the user information being inputted by a user and stored in the storage unit.

5. The apparatus of claim 4, wherein the user information comprises web browser usage pattern information of the user.

6. The apparatus of any of claims 1 to 5, wherein the control unit is adapted to replace the content of the website with new content, and to add new content to the region of interest or overlays new content with the content of the website,
the new content preferably being replaced with the content of the website if a predetermined event occurs.

7. A method for controlling a web browser display, comprising:
determining a type of protocol of an accessed website;
determining layout characteristics of the website based on the type of the protocol;
modifying content of the website using information about the layout characteristics of the website; and
displaying the modified content on a web browser.

8. The method of claim 7, wherein the determining the layout characteristics of the website comprises identifying a region of interest based on the type of the protocol of the website and the layout characteristics,
the protocol of the website preferably being a version of Hyper Text Markup Language (HTML).

9. The method of claim 8, wherein the identifying the region further comprises filtering at least one of tag information, an access URL, and a content format of the protocol of the website.

10. The method of any of claims 7 to 9, wherein modifying the content of the website and displaying the modified content on the web browser are performed based on user information,
the user information preferably being inputted by a user.

11. The method of claim 10, wherein the user information is web browser usage pattern information of a website user.

12. The method of any of claims 7 to 11, wherein modifying the content of the website and displaying the modified content on the web browser further comprises replacing the content of the website with new content or adding new content to the content of the website.

13. The method of any of claims 7 to 12, wherein modifying the content of the website and displaying the modified content on the web browser comprises overlaying new content on the content of the website,
and, preferably, further comprising replacing the new content with the content of the website if a predetermined event occurs.

14. The method of claim 12 or 13, wherein the new content is advertisement content provided by an advertisement server.

15. A mobile terminal, comprising:
a communication unit adapted to transmit data to a web server and to receive data including content of a website from the web server;
a determination unit adapted to determine a type of protocol of the content and to determine a modification method for a region of interest of the website;
an extraction unit adapted to extract detailed information of at least one region of the content based on characteristics of the protocol type;
an identification unit adapted to identify a region of interest from the content based on the detailed information;
a storage unit adapted to store at least one of user information, web browser usage information, and layout characteristics;
a control unit adapted to modify the content of the region of interest of the website using the modification method; and
a display unit adapted to display the modified content on a web browser.
